(19) **Europäisches Patentamt / European Patent Office / Office européen des brevets**

(11) **EP 3 231 509 A1**

(12) **EUROPEAN PATENT APPLICATION**
published in accordance with Art. 153(4) EPC

(43) Date of publication:
**18.10.2017  Bulletin 2017/42**

(21) Application number: **16743101.4**

(22) Date of filing: **13.01.2016**

(51) Int Cl.:
**B01J 20/06** $^{(2006.01)}$ **B01J 20/02** $^{(2006.01)}$
**B01J 20/30** $^{(2006.01)}$ **G21F 9/02** $^{(2006.01)}$
**G21F 9/12** $^{(2006.01)}$

(86) International application number:
**PCT/JP2016/050795**

(87) International publication number:
**WO 2016/121497 (04.08.2016 Gazette 2016/31)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **26.01.2015  JP 2015011915**

(71) Applicant: **Nippon Chemical Industrial Co., Ltd.**
**Tokyo 136-8515 (JP)**

(72) Inventors:
• **MIYABE, Shinsuke**
  **Tokyo 136-8515 (JP)**

• **KINOSE, Yutaka**
  **Tokyo 136-8515 (JP)**
• **KOZASU, Kenta**
  **Tokyo 136-8515 (JP)**
• **SAKAMOTO, Takeshi**
  **Tokyo 136-8515 (JP)**
• **SATOU, Kiyoshi**
  **Tokyo 136-8515 (JP)**
• **SUGIHARA, Kaori**
  **Tokyo 136-8515 (JP)**

(74) Representative: **Evans, Marc Nigel**
**Page White & Farrer**
**Bedford House**
**John Street**
**London, WC1N  2BF (GB)**

(54) **ADSORBENT AND METHOD FOR PRODUCING SAME**

(57)    Provided is an adsorbent for removal of iodide ions and iodate ions, which exhibits excellent adsorption performance of iodide ions and iodate ions. An adsorbent according to the present invention comprises cerium(IV) hydroxide and a poorly soluble silver compound. It is preferable that the content of cerium(IV) hydroxide is 50% by mass or more and 99% by mass or less, and the content of the poorly soluble silver compound is 1% by mass or more and 50% by mass or less. It is also preferable that the poorly soluble silver compound is at least one selected from silver zeolite, silver phosphate, silver chloride, and silver carbonate.

**EP 3 231 509 A1**

**Description**

Technical Field

The present invention relates to an adsorbent for removal of iodide ions and iodate ions and a method for producing same, particularly relates to an adsorbent useful for the treatment of water discharged from nuclear facilities and a method for producing same.

Background Art

The radioactive iodine discharged from nuclear facilities is said to be three species, iodine ($I_2$), hydroiodic acid (HI), and methyl iodide ($CH_3I$).

The following methods are used as a method for removing these radioactive iodine species.

(1) A method involving contacting an iodine-containing gas or liquid with silver zeolite to collect radioactive iodine as silver iodide (the following Non Patent Literature 1).
(2) A method involving carrying out isotope exchange of radioactive iodine (iodine 131) for nonradioactive iodine using a large amount of potassium iodide-impregnated charcoal to collect radioactive iodine (the following Patent Literature 1).
(3) A method involving contacting an iodine-containing gas or liquid with ion exchange fiber having an amino group to remove radioactive iodine (the following Patent Literature 2).
(4) A method involving adsorbing iodine using insoluble cyclodextrin or a derivative thereof as an active component (the following Patent Literature 3).

Further, there have been known techniques involving using a cerium compound as an adsorbent for removal of selenium, boron, arsenic, and the like (the following Patent Literatures 4 to 6).

Citation List

Patent Literature

Patent Literature 1: Japanese Patent Laid-Open No. 2000-254446
Patent Literature 2: International Publication No. WO2012/147937
Patent Literature 3: Japanese Patent Laid-Open No. 2008-93545
Patent Literature 4: Japanese Patent Laid-Open No. 2013-78711
Patent Literature 5: Japanese Patent Laid-Open No. 2008-259942
Patent Literature 6: International Publication No. WO2011/052008

Non Patent Literature

Non Patent Literature 1: Innovative and Viable Nuclear Energy Technology Development Project, Fiscal Year 2003 (Heisei 15) Research accomplishment report (Summary), "Technological development for disposal of radioactive iodine" March, 2004 (Heisei 16), National Institute for Materials Science

Summary of Invention

Technical Problem

As described above, iodine, hydroiodic acid, and methyl iodide have been known as a form of radioactive iodine discharged from nuclear facilities. Therefore, iodide ions ($I^-$) have been the main target for removal as the ion form of radioactive iodine in water. On the other hand, the removal of iodate ions ($IO_3^-$) has been a problem recently. The reason of this is probably as follows: since sodium hypochlorite is used in the step of treating contaminated water from nuclear power plants, iodate ions are produced by the oxidation of iodine ions in the contaminated water with sodium hypochlorite.

However, an adsorbent which can efficiently remove both iodide ions ($I^-$) and iodate ions ($IO_3^-$) has not been known heretofore.

Further, an adsorbent which can adsorb a number of types of radioactive substances is required for improving the efficiency of adsorption facilities and reducing the problem of treatment of the adsorbent after adsorbing radioactive substances. Here, examples of target radioactive substances include cesium, strontium, antimony, ruthenium, and cobalt; and further examples include iodide ions ($I^-$) and iodate ions ($IO_3^-$).

Therefore, an object of the present invention is to provide an adsorbent excellent in the ability of adsorbing iodate ions ($IO_3^-$) and other radioactive substances as well, and particularly, an object of the present invention is to provide an adsorbent excellent in the performance of adsorbing both iodate ions ($IO_3^-$) and iodide ions ($I^-$).

Solution to Problem

As a result of intensive studies to solve the above problems, the present inventors have found that an adsorbent excellent in the ability of adsorbing iodate ions ($IO_3^-$) and other radioactive substances as well is obtained by using cerium(IV) hydroxide in combination with a specific component, and particularly that an adsorbent excellent in the performance of adsorbing both iodide ions ($I^-$) and iodate ions ($IO_3^-$) is obtained by using cerium(IV) hydroxide in combination with a poorly soluble silver compound.

Specifically, the present invention provides an adsorbent for removal of iodate ions and iodide ions, comprising cerium(IV) hydroxide and a poorly soluble silver compound.

Further, the present invention provides a method for producing the adsorbent,
the method comprising the steps of: providing a mixed slurry containing a poorly soluble silver compound and wet-ground cerium(IV) hydroxide; subjecting the mixed slurry to solid-liquid separation and then drying the resulting solid to obtain a dry product; and grinding the dry product to obtain a ground product.

Advantageous Effects of Invention

According to the present invention, an adsorbent excellent in the properties of adsorbing and removing iodate ions and iodide ions can be provided, and the adsorbent can be produced by an industrially advantageous method.

Brief Description of Drawing

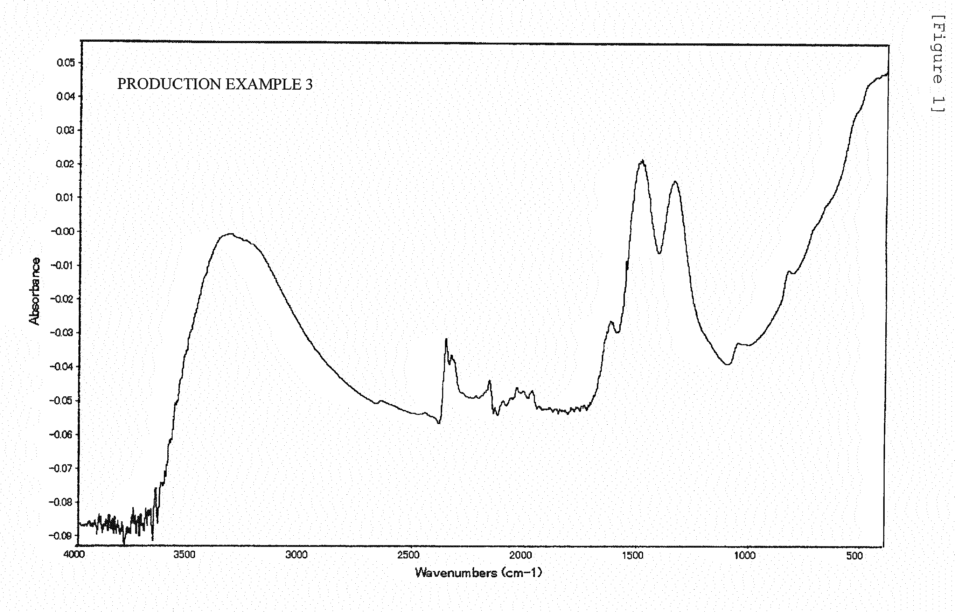

[Figure 1] Figure 1 is a chart obtained by subjecting cerium(IV) hydroxide produced in Production Example 3 to infrared absorption spectrum analysis.

Description of Embodiments

Hereinafter, the adsorbent of the present invention will be described based on preferred embodiments thereof.

The adsorbent of the present invention contains cerium(IV) hydroxide and other components. Thereby, the adsorbent can maintain high adsorption performance to iodate ions and adsorb other materials at the same time. Examples of other components contained in the adsorbent include a silver compound for adsorbing iodide ions, a manganese oxide such as manganese dioxide for adsorbing ruthenium, and hydrous zirconium oxide for adsorbing antimony.

Particularly, when the adsorbent of the present invention contains cerium(IV) hydroxide and a poorly soluble silver compound, it has high performance of adsorbing iodide ions and iodate ions. Therefore, the adsorbent of the present invention can efficiently remove iodide ions and iodate ions in water. In the adsorbent of the present invention, the action of adsorbing iodate ions is synergistically improved by using cerium hydroxide in combination with a poorly soluble silver compound.

The cerium(IV) hydroxide used in the adsorbent of the present invention preferably has a weight loss of a specific value or more when the temperature is increased from 200°C to 600°C. The present inventors consider that cerium(IV) hydroxide having a high weight loss has a large amount of OH groups, which can contribute to ion exchange reactions with anions such as iodate ions and iodide ions in water, and that this is one of the reasons why the performance of adsorbing these anions by the adsorbent of the present invention is high. It is preferred that the weight loss be 4.0% or more in view of improving the performance of adsorbing iodate ions and iodide ions, particularly iodate ions. Further, it is preferred that the weight loss of cerium(IV) hydroxide be 10.0% or less in view of keeping stable adsorption performance. From these points of view, it is more preferred that the weight loss be 4.0% or more and 8.0% or less. In order to bring the weight loss of cerium(IV) hydroxide into the above range, cerium(IV) hydroxide may be produced by a preferred production method described below. The weight loss can be measured by a method described in Examples described below.

It is preferred that, in the infrared absorption spectrum analysis of cerium(IV) hydroxide used in the present invention, an absorption peak assigned to the stretching vibration of hydroxyl groups be observed in the range of 3270 $cm^{-1}$ or more and 3330 $cm^{-1}$ or less, and that absorption peaks assigned to the deformation vibration of hydroxyl groups be further observed in the range of 1590 $cm^{-1}$ or more and 1650 $cm^{-1}$ or less and in the range of 1410 $cm^{-1}$ or more and

1480 cm$^{-1}$ or less. In the analysis of cerium hydroxide having high ability of adsorbing iodate ions and iodide ions, an absorption peak assigned to the stretching vibration of hydroxyl groups is clearly observed around 3300 cm$^{-1}$, and absorption peaks assigned to the deformation vibration of hydroxyl groups are clearly observed around 1620 cm-1 and around 1470 cm$^{-1}$. On the other hand, in cerium(IV) hydroxide having low ability of adsorbing iodate ions and iodide ions, these absorption peaks are small. In the infrared absorption spectrum analysis of a powder or a granular product of cerium(IV) hydroxide used in the present invention, it is preferred that an absorption peak assigned to the stretching vibration of hydroxyl groups be observed in the range of 3280 cm$^{-1}$ or more and 3325 cm$^{-1}$ or less, particularly in the range of 3290 cm$^{-1}$ or more and 3320 cm$^{-1}$ or less; it is preferred that an absorption peak assigned to the deformation vibration of hydroxyl groups be observed in the range of 1600 cm$^{-1}$ or more and 1640 cm$^{-1}$ or less, particularly in the range of 1610 cm$^{-1}$ or more and 1630 cm$^{-1}$ or less; and it is preferred that an absorption peak assigned to the deformation vibration of hydroxyl groups be observed in the range of 1420 cm$^{-1}$ or more and 1475 cm$^{-1}$ or less, particularly in the range of 1430 cm$^{-1}$ or more and 1470 cm$^{-1}$ or less. In order to obtain cerium(IV) hydroxide having peaks in the above ranges, cerium(IV) hydroxide may be produced by a preferred production method described below. The infrared absorption spectrum can be measured by a method described in Examples described below.

Cerium(IV) hydroxide used in the present invention is not limited by a method of obtaining same, but is preferably obtained by the following production method.

Specifically, a powder of cerium(IV) hydroxide is preferably obtained by oxidizing trivalent ceric salt to tetravalent ceric salt and neutralizing an aqueous solution of the resulting tetravalent ceric salt.

Examples of trivalent ceric salt that can be used include cerium(III) nitrate, cerium(III) chloride, cerium(III) sulfate, and cerium(III) acetate. Cerium(III) nitrate is preferred in terms of availability because it is a starting material for the production and purification of various cerium compounds.

A step of wet oxidizing trivalent ceric salt is performed by adding an oxidizing agent to an aqueous solution in which the trivalent ceric salt is dissolved. Examples of the oxidizing agent include hydrogen peroxide and sodium peroxide. Hydrogen peroxide is suitably used because it is inexpensive and common. The concentration of ceric salt in an aqueous solution in which trivalent ceric salt is dissolved is preferably 0.25 mol/L or more and 0.8 mol/L or less, more preferably 0.3 mol/L or more and 0.6 mol/L or less. The amount of the oxidizing agent added is enough as long as the amount is sufficient for oxidizing trivalent ceric salt as a starting material, but is preferably 1.0 mol or more and 2.0 mol or less relative to 1 mol of trivalent ceric salt. An aqueous solution containing tetravalent ceric salt is obtained by this step.

Cerium(IV) hydroxide is obtained from the tetravalent ceric salt by adding a neutralizer to the aqueous solution after oxidation. Examples of the neutralizer that can be used include an alkali, and specific examples thereof include ammonium hydroxide, sodium hydroxide, and potassium hydroxide. The pH after neutralization is preferably in the range of 6.5 or more and 9.5 or less.

In order to uniformly advance the reaction, it is preferred to stir the reaction solution for a certain period of time after adding an oxidizing agent and a neutralizer in the above oxidation reaction and neutralization reaction, respectively.

A slurry containing cerium(IV) hydroxide is obtained by the above steps. The resulting slurry is filtered by a conventional method to obtain a solid, and the resulting solid is washed and dried. The drying is preferably performed for 2 hours or more and 48 hours or less at 50°C or more and 110°C or less. Thereby, a dry product of cerium(IV) hydroxide is obtained.

The dry product of cerium(IV) hydroxide obtained by the above production method is generally a mixture of brittle blocks and powder. The dry product may be used as a cerium(IV) hydroxide powder as it is, or may also be subjected to grinding, classification, and the like to form a powder having a controlled particle size. Examples of the grinding in this case include dry grinding, in which a jet mill, a ball mill, a hammer mill, a pulverizer, or the like can be used.

The content of cerium(IV) hydroxide in the adsorbent of the present invention is preferably 50% by mass or more, in view of improving the performance of adsorbing iodate ions and iodide ions, particularly iodate ions, and in view of possibilities of suppressing the amount of a high-cost silver compound blended and thus reducing production cost. Further, the content of cerium(IV) hydroxide in the adsorbent of the present invention is preferably 99% by mass or less, in view of the ease of producing the adsorbent, and in view of adsorbing iodide ions and iodide ions with a good balance. From these points of view, the content of cerium(IV) hydroxide in the adsorbent of the present invention is more preferably 60% by mass or more and 98% by mass or less, particularly preferably 70% by mass or more and 97% by mass or less. The content of cerium(IV) hydroxide in an adsorbent can be measured by the following method, by the quantitative analysis using an X-ray fluorescence diffractometer.

<Measuring Method of the Content of Cerium(IV) Hydroxide>

ZSX100e manufactured by Rigaku Corporation is used as an X-ray fluorescence analyzer. The content of cerium(IV) hydroxide is determined by measuring all elements under the following measurement conditions: bulb: Rh (4 kW), atmosphere: vacuum, analysis window material: Be (30 $\mu$m in thickness), measurement mode: SQX analysis (EZ scan), diameter of measurement: 30 mm$\phi$. The amount of cerium(IV) hydroxide is determined by removing $CO_2$

components from the result of measurement and then subtracting all impurities (components other than cerium compounds, for example, $Al_2O_3$, $Ag_2O$, $SiO_2$, $P_2O_5$, CaO, $SO_3$, $ZrO_2$, $Nd_2O_3$, $Au_2O$, Cl, and F) from all the components. A sample of cerium hydroxide for analyzing is obtained by putting an adsorbent in a suitable container such as an aluminum ring, inserting it between dies, and then applying thereto a pressure of 10 MPa with a pressing machine, thereby pelletizing the adsorbent.

Subsequently, a poorly soluble silver compound used in the present invention will be described. In the present invention, a silver compound can be prevented from being dissolved and flowed out when the adsorbent of the present invention is subjected to water treatment such as passing of a liquid, because of using a poorly soluble silver compound as a silver compound. From this point of view, the poorly soluble silver compound used in the present invention preferably has a solubility in 100 g of water at 20°C of 10 mg or less, more preferably 5 mg or less. Solubility as described here is the solubility under 1 atmospheric pressure, that is, 101.325 kPa. Solubility can be measured by a conventional method.

Examples of the poorly soluble silver compound used in the present invention include silver zeolite, silver phosphate ($Ag_3PO_4$, solubility in 100 g of water at 19.3°C is 0.65 mg), silver chloride (AgCl, solubility in 100 g of water at 10°C is 0.08 mg), and silver carbonate ($Ag_2CO_3$, solubility in 100 g of water at 20°C is 3 mg). These may be used singly or in combination of two or more.

Here, silver zeolite is a zeolite formed by incorporating silver ions into the aluminosilicate structure of zeolite, which is a type of aluminosilicate having a three-dimensional network structure, through the cation exchange ability of zeolite. Specifically, silver zeolite refers to a zeolite in which at least a part of cations constituting aluminosilicate such as sodium ions and potassium ions is exchanged with silver ions by ion exchange. Examples of zeolite subjected to ion exchange for obtaining silver zeolite include naturally occurring products, such as A-type zeolite, X-type zeolite, Y-type zeolite, T-type zeolite, high-silica zeolite, sodalite, mordenite, analcime, clinoptilolite, chabazite, and erionite, and semi-isynthesized products and chemically synthesized products, such as artificial zeolite. Among these zeolites, it is preferred to use A-type zeolite in view of increasing the silver content in the poorly soluble silver compound and also in view of ease of performing ion exchange. The silver zeolite preferably has a silver content of 10% by mass or more, more preferably 20% by mass or more. The upper limit of the silver content is 43.3% by mass, for example, when zeolite is A-type zeolite. The silver content in silver zeolite can be determined by measuring, by ICP, the amounts of Na, Si, Al, and Ag, which are the zeolite components, in a solution obtained by dissolving silver zeolite in an acid.

The above poorly soluble silver compound is preferably at least one selected from silver phosphate, silver zeolite, and silver chloride, and is more preferably silver phosphate and/or silver zeolite, in view of low solubility and high silver content.

The content of the poorly soluble silver compound in the adsorbent of the present invention is preferably 1.0% by mass or more, in view of improving the performance of adsorbing iodate ions and iodide ions, particularly iodide ions. Further, the content of the poorly soluble silver compound is preferably 50% by mass or less, in view of adsorbing iodate ions and iodide ions with a good balance and in view of the ease of producing the adsorbent. From these points of view, the content of the poorly soluble silver compound in the adsorbent of the present invention is preferably 1.0% by mass or more and 50% by mass or less, more preferably 3.0% by mass or more and 30% by mass or less. The content of the poorly soluble silver compound in the adsorbent can be measured by the method described below.

<Measuring Method of the Content of Poorly Soluble Silver Compound>

For example, when the poorly soluble silver compound is silver zeolite, the content of the poorly soluble silver compound can be determined by measuring, by ICP, the amounts of Na, Si, Al, and Ag which are zeolite components in a solution obtained by dissolving the adsorbent in an acid. Further, for example, when the poorly soluble silver compound is a silver salt such as silver phosphate or silver carbonate or a silver halide such as silver chloride, the content of the poorly soluble silver compound can be determined by dissolving the adsorbent in nitric acid, then measuring, by ICP, the amount of Ag which is a component of the poorly soluble silver compound, and converting the measured value into $Ag_3PO_4$, $Ag_2CO_3$, AgCl, or the like.

The form of the adsorbent of the present invention may be in any form such as powder, grains, capsules, sheets, rods, plates, blocks, spheres, and cylinders, or may be a combination of one or more of these forms. The grains as described here include granules. Since cerium(IV) hydroxide and a poorly soluble silver compound are generally in the form of powder in itself, the above various forms can be obtained by subjecting these compounds to any of various shaping process. Examples of such shaping process include granulation processing for forming cerium(IV) hydroxide and a poorly soluble silver compound into granules; a method for encapsulating cerium(IV) hydroxide and the poorly soluble silver compound, including forming a slurry of cerium(IV) hydroxide and a poorly soluble silver compound and dropwise adding the slurry to a solution containing a hardener such as calcium chloride; a method involving impregnating and coating the surface of a resin core with cerium(IV) hydroxide and a poorly soluble silver compound; and a method involving adhering cerium(IV) hydroxide and a poorly soluble silver compound to the surface and/or the inner part of a sheet-form base material formed from natural fibers or synthetic fibers, followed by immobilization to obtain an adsorbent in the form of a sheet. Examples of the method of granulation processing include a known method, such as stirring and mixing granulation, rolling granulation, extrusion granulation, crushing granulation, fluidized bed granulation, spray drying granulation (spray dry), and compression granulation. A binder and a solvent may be if necessary added and mixed in the process of granulation. Particularly, if an adsorption tower is filled with small particles of cerium(IV) hydroxide or a poorly soluble silver compound, the particles of the cerium(IV) hydroxide and the poorly soluble silver compound may clog the adsorption tower when water is passed through the adsorption tower. Therefore, it is preferred to apply any of the above various types of shaping process to these small particles to convert them into a form that is easily used in an adsorption tower.

The binder may be any of an organic binder or an inorganic binder, and examples of the organic binder include polyvinyl alcohol, polyethylene oxide, hydroxyethyl cellulose, hydroxypropyl cellulose, hydroxypropyl methylcellulose, hydroxyethyl methylcellulose, carboxymethyl cellulose, hydroxypropyl methylcellulose, methylcellulose, ethylcellulose, starch, cornstarch, molasses, milk sugar, gelatin, dextrin, gum arabic, alginic acid, polyacrylic acid, glycerin, polyethylene glycol, and polyvinyl pyrrolidone.

Examples of the inorganic binder include alumina sol, titania sol, zirconia sol, ammonium zirconium carbonate, silica sol, water glass, and silica-alumina sol. Various solvents such as an aqueous solvent and an organic solvent may be used as a solvent. Further, when magnetic particles are incorporated into shaped products such as granules in the above shaping process, it is possible to recover the adsorbent from water containing iodate ions and iodide ions by magnetic separation. Examples of the magnetic particles include a powder of metals such as iron, nickel, and cobalt or magnetic alloys containing these metals as the main component and a powder of metal oxide magnetic materials such as triiron tetroxide, iron sesquioxide, cobalt-added iron oxide, barium ferrite, and strontium ferrite.

The adsorbent of the present invention is preferably composed of a granular product having a particle size of 200 $\mu$m or more and 1000 $\mu$m or less. Specifically, the phrase "composed of a granular product having a particle size of 200 $\mu$m or more and 1000 $\mu$m or less" means the following: when a sieve having an opening of 212 $\mu$m according to JIS Z8801 and a sieve having an opening of 1 mm according to JIS Z8801 are used, 99% by mass or more of granules preferably passes through the sieve having an opening of 1 mm, and 99% by mass or more of granules preferably does not pass through the sieve having an opening of 212 $\mu$m. Thus, it is preferred that the content of granules having a particle size of 200 $\mu$m or less in the adsorbent of the present invention be small, because an adsorption tower will not be easily clogged with powders when water is passed through the adsorption tower filled with the adsorbent. Further, it is preferred that the content of a granules having a particle size of 1000 $\mu$m or more in the adsorbent of the present invention be small, because the adsorption ability of the adsorbent is high to improve the whole adsorption performance. Particularly, the adsorbent of the present invention is preferably composed of a granular product having a particle size of 300 $\mu$m or more and 600 $\mu$m or less. Specifically, when a sieve having an opening of 300 $\mu$m according to JIS Z8801 and a sieve having an opening of 600 $\mu$m according to JIS Z8801 are used, 99% by mass or more of granules preferably passes through the sieve having an opening of 600 $\mu$m, and 99% by mass or more of granules preferably does not pass through the sieve having an opening of 300 $\mu$m.

As described above, the adsorbent of the present invention may contain other components such as a binder and a hardener other than the cerium(IV) hydroxide and the poorly soluble silver compound. Generally, the content of other components other than the cerium(IV) hydroxide and the poorly soluble silver compound in the adsorbent of the present invention is preferably 20% by mass or less, more preferably 10% by mass or less.

Particularly, it is preferred that other components such as a binder and a hardener be minimized, because the performance of adsorbing iodate ions and iodide ions of the adsorbent of the present invention can be improved. The amount of other components in the adsorbent in such a case is for example 5% by mass or less, particularly 3% by mass or less. For example, it is preferred that the adsorbent of the present invention be produced, for example, by the production method described below, because the adsorbent can be formed by minimizing other components as described above. The amount of other components may be determined by determining the content of cerium(IV) hydroxide and a poorly soluble silver compound by the above method and subtracting the content from 100% by mass.

Hereinafter, the above preferred production method for producing the adsorbent of the present invention will be described.

This production method comprises the steps of: providing a mixed slurry containing a poorly soluble silver compound and wet-ground cerium(IV) hydroxide; subjecting the mixed slurry to solid-liquid separation and then drying the resulting solid to obtain a dry product; and grinding the dry product to obtain a ground product.

Preferably, the step of obtaining a mixed slurry containing the poorly soluble silver compound and wet-ground cerium(IV) hydroxide is the following (a) or (b), for example:

(a) providing a mixed slurry by wet grinding a mixture of a poorly soluble silver compound and cerium(IV) hydroxide;
(b) providing a mixed slurry by wet grinding cerium(IV) hydroxide to obtain a slurry and then mixing a poorly soluble silver compound with the slurry.

Hereinafter, the step (a) will be described first.

It is preferred to use grinding media in the wet grinding, and examples of a wet grinding mill used in this case include a bead mill, Attritor (R), a sand grinder, and a paint shaker. Various grinding media in the form of a sphere (ball), a cylinder, and the like can be used, but spherical grinding media are preferred. Examples of the material of the grinding media include glass, alumina, and zirconia. The diameter of the grinding media is preferably 0.5 mm or more and 5 mm or less, more preferably 1 mm or more and 3 mm or less. Examples of a dispersion medium that can be used in the wet grinding include water and a mixed solvent of water and a polar organic solvent. An alcohol is preferred as the polar organic solvent, and examples include methanol and ethanol.

As for the ratio of the amount of the dispersion medium to the total amount of cerium(IV) hydroxide and a poorly soluble silver compound to be subjected to wet grinding, the amount of the dispersion medium is preferably 100 parts by mass or more and 200 parts by mass or less, more preferably 125 parts by mass or more and 185 parts by mass or less, relative to 100 parts by mass of the total amount. Further, as for the ratio of the amount of the grinding media to the total amount of cerium(IV) hydroxide and a poorly soluble silver compound to be subjected to wet grinding, the amount of the grinding media is preferably 100 parts by volume or more and 180 parts by volume or less, more preferably 110 parts by volume or more and 170 parts by volume or less, relative to 100 parts by mass of the total amount. In the context of the ratio of the amount of grinding media to the amount of cerium(IV) hydroxide, the "parts by mass" means the amount in g, and the "parts by volume" means the amount in mL.

Further, as for the grinding particle size in wet grinding, the average particle size is preferably in the range of 0.7 $\mu$m or more and 3.0 $\mu$m or less. It is preferred that the average particle size be 0.7 $\mu$m or more, because the time of filtration in the solid-liquid separation after wet grinding is reduced to improve efficiency. Further, it is preferred that the average particle size be 3.0 $\mu$m or less, because a dry product (dry cake) obtained by drying a solid-liquid separated solid tends to be rigid to easily obtain a suitable granular product in the subsequent grinding and classification steps. From this point of view, the average particle size is preferably in the range of 0.7 $\mu$m or more and 3.0 $\mu$m or less. The average particle size can be measured, for example, with Microtrac (for example, Microtrac MT3000II), which is a laser diffraction/scattering particle size distribution analyzer manufactured by Nikkiso Co., Ltd. In the measurement, a solution obtained by dissolving sodium hexametaphosphate in ion-exchanged water in an amount of 0.3% is put in a chamber of a sample circulation vessel of Microtrac. Dried particles are added to the chamber until the analyzer indicates a proper concentration and then dispersed.

A mixed slurry is obtained by wet grinding according to the above step (a). When a poorly soluble silver compound is obtained by wet synthesis reaction or ion exchange reaction, in the wet grinding of the step (a), the wet grinding of the poorly soluble silver compound is preferably performed by adding, to cerium hydroxide, a cake obtained by solid-liquid separation of a slurry obtained after completion of these reactions.

As described above, in the step (b), a mixed slurry is obtained by wet grinding cerium(IV) hydroxide by the same wet grinding as in the step (a) to obtain a slurry and then mixing a poorly soluble silver compound with the slurry. The poorly soluble silver compound to be added to cerium(IV) hydroxide is preferably ground in advance, but when the particle size of the poorly soluble silver compound is already sufficiently small, the compound may not be ground. When the poorly soluble silver compound is ground in advance and used, the grinding may be any of wet grinding and dry grinding. Further, in the mixing of a slurry and a poorly soluble silver compound, a highspeed stirrer such as a homogenizer may be used in addition to a common stirring mixer.

It is preferred to perform the solid-liquid separation of a mixed slurry by filtration, and it is preferred to perform the solid-liquid separation with separation equipment in which a separated solid is obtained in a block form, such as a filter press and a centrifuge. Further, the solid obtained by solid-liquid separation may be dried in a box type dryer or the like. Drying temperature is preferably 100°C or more and 120°C or less. It is preferred that drying temperature be 120°C or less from the point of view that the number of ion-exchangeable hydroxyl groups of cerium(IV) hydroxide is easily prevented from being reduced. The dried solid is preferably ground by a method of passing the dried solid through a slit having a width of 0.5 mm or more and 2.0 mm or less, for example, in a roller mill.

Further, in the steps of drying a solid and then grinding the dry product, instead of grinding and drying a solid in a hydrous state as it is, the solid in a hydrous state may be extruded through an opening member in which a plurality of openings are formed to obtain a shaped product, and the resulting shaped product may be dried and then ground into grains. The grinding in this case can be performed with Roundel Mill. Examples of the shape of holes formed in the opening member include a circular shape, a triangular shape, a polygonal shape, and an annular shape. The equivalent circle diameter of the opening is preferably 0.4 mm or more and 1.0 mm or less. The equivalent circle diameter as described here is the diameter of a circle calculated from the area of a hole when the area of a hole is assumed to be the area of a circle.

A ground product may be used as it is, but from the reason described above, the ground product is preferably classified to a particle size of 200 $\mu$m or more and 1000 $\mu$m or less, more preferably classified to a particle size of 300 $\mu$m or more and 600 $\mu$m or less.

The adsorbent obtained by the above production method can be suitably used as an adsorbent in a water treatment system having an adsorption vessel and an adsorption tower which are to be filled with a radioactive substance-adsorbing material, taking advantage of its high performance for adsorbing iodate ions and iodide ions.

Examples

Hereinafter, the present invention will be specifically described by Examples and Comparative Examples, but the present invention is not limited thereby. Unless otherwise specified, "%" represents "% by mass". The evaluation equipment used in Examples and Comparative Examples are as follows.

<Evaluation Equipment>

- Thermogravimetric analysis (TG-DTA analysis): The sample weight at 200°C and the sample weight at 600°C were measured when the temperature of a 30 mg sample was increased at a rate of temperature increase of 5°C/min from 30°C to 1000°C using an apparatus for thermogravimetry TGA/DSC1 manufactured by Mettler-Toledo International Inc., and the weight loss was calculated from the following calculation formula:

$$\text{Weight loss (\%)} = (A - B)/A \times 100$$

wherein A represents sample weight at 200°C, and B represents sample weight at 600°C.
- Infrared absorption spectrum analysis: The spectrum was measured using NICOLET6700 manufactured by Thermo Fisher Scientific Inc. under the following conditions: resolution: 4 $cm^{-1}$, integration number: 256 times, and measured wave number area: 400 $cm^{-1}$ to 4000 $cm^{-1}$. The spectrum was measured by ATR spectroscopy, in which ATR compensation and smoothing processing of the spectrum were performed.
- Concentration of iodide ions and iodate ions in the adsorption test: The concentration was measured with an ion chromatography apparatus (DIONEX ICS1600 available from DIOTEC TOKYO Co., Ltd.).

<Production Example 1> Preparation of Silver Zeolite

Silver-exchanged A-type zeolite was prepared by the following reaction of A-type zeolite (product name: NA-100P, manufactured by Nippon Chemical Industrial Co., Ltd.) with silver nitrate.

$$Na_2O \cdot Al_2O_3 \cdot 2SiO_2 \cdot 4.5H_2O + AgNO_3 \rightarrow (Na, Ag)O \cdot Al_2O_3 \cdot 2SiO_2 \cdot 4.5H_2O + NaNO_3$$

Specifically, 36.5 g of the A-type zeolite was put in a 500 mL beaker, and thereto was added 300 g of ion-exchanged water and then stirred to disperse the A-type zeolite to obtain a zeolite-dispersed slurry. Seventeen point zero grams of silver nitrate was dissolved in 100 mL of ion-exchanged water, and the resulting solution was added to the zeolite-dispersed slurry. After addition, stirring was continued for 3 hours at ordinary temperature to allow ion exchange to occur. Then, the slurry after reaction was filtered, and the resulting solid was washed and then dried to prepare silver-exchanged A-type zeolite. The amount of silver nitrate used was an amount corresponding to 50% of the theoretical cation exchange capacity of A-type zeolite. The silver content in the silver-exchanged A-type zeolite was measured by the above method, and it was found to be 22.6%.

<Production Example 2> Preparation of Silver Phosphate

Silver phosphate was prepared by the following reaction of disodium hydrogenphosphate with silver nitrate.

$$Na_2HPO_4 + 3AgNO_3 \rightarrow Ag_3PO_4 + 2NaNO_3 + HNO_3$$

Thirty five point eight grams of disodium hydrogenphosphate dodecahydrate was dissolved in 300 mL of ion-exchanged water. Fifty one point zero grams of silver nitrate was dissolved in 150 mL of ion-exchanged water; the resulting solution was added to the disodium hydrogenphosphate aqueous solution; and after addition, the resulting mixture was continuously stirred for 1 hour at ordinary temperature to allow the components to react with each other and allow aging. Then, the slurry after the reaction was filtered; the resulting solid was washed; and then the washed product was dried to thereby obtain silver phosphate (presumed purity by weight measurement: 100%).

<Production Example 3> Preparation of Cerium Hydroxide

Eighty six point eight grams (0.2 mol) of cerium(III) nitrate hexahydrate was weighed in a 1 L beaker and dissolved in 500 mL of ion-exchanged water. Thereto was added 19.4 g (0.2 mol) of 35% aqueous hydrogen peroxide, and the mixture was stirred for 1 hour. Aqueous ammonia (6 mol/L) was added to the resulting mixture to thereby adjust the pH of the mixture to 9.0, and the resulting mixture was continuously stirred one whole day and night to obtain a reaction slurry. The resulting reaction slurry was filtered to obtain a solid, and the solid was washed and then dried for 24 hours at 50°C to obtain a dry product of cerium(IV) hydroxide. The weight loss measured on the resulting cerium(IV) hydroxide was 4.3%. Further, the resulting cerium hydroxide was subjected to infrared absorption spectrum analysis. The resulting chart is shown in Figure 1. From Figure 1, an absorption peak assigned to the stretching vibration of hydroxyl groups was clearly observed in the range of 3270 $cm^{-1}$ or more and 3330 $cm^{-1}$ or less, and absorption peaks assigned to the deformation vibration of hydroxyl groups were clearly observed in the range of 1590 $cm^{-1}$ or more and 1650 $cm^{-1}$ or less and in the range of 1410 $cm^{-1}$ or more and 1480 $cm^{-1}$ or less. It was verified that by the quantitative analysis using the X-ray fluorescence diffractometer described above, the resulting cerium hydroxide had a purity of 99%.

<Examples 1 to 6> Preparation of Cerium Hydroxide/Silver Compound Composite

The dry product of cerium(IV) hydroxide obtained in Production Example 3 was used as cerium(IV) hydroxide. Further, the silver zeolite obtained in Production Example 1 or the silver phosphate obtained in Production Example 2 was used as a poorly soluble silver compound.

Cerium(IV) hydroxide and the poorly soluble silver compound obtained in Production Example 1 or 2 were put in a 100 mL mayonnaise bottle in an amount of 35 g in total. The blending ratio (amount blended) of the cerium(IV) hydroxide and the poorly soluble silver compound was as shown in Table 1. In the mayonnaise bottle, were further put 50 g of ion-exchanged water and 60 g (40 mL) of glass bead having a diameter of 2 mm, and the mixture was subjected to grinding in a paint shaker for 20 minutes. The average particle size of the slurry after grinding was measured by the above method, and it was found to be 1.2 $\mu$m. The ground product was filtered and then dried at 110°C. A solid after drying was ground by mortar grinding. The resulting ground product was classified by passing the ground product through a sieve having a nominal opening of 600 $\mu$m according to JIS Z8801 and then through a sieve having a nominal opening of 300 $\mu$m according to JIS Z8801 to obtain a granular product having a particle size of 300 $\mu$m or more and 600 $\mu$m or less, and the granular product was used as an adsorbent in each Example.

<Comparative Example 1>

Thirty five grams of cerium(IV) hydroxide produced in Production Example 3 was used as the adsorbent in Comparative Example 1 as it is.

<Comparative Example 2>

Thirty five grams of silver zeolite produced in Production Example 1 was used as the adsorbent in Comparative Example 2 as it is.

<Comparative Example 3>

Thirty five grams of silver phosphate produced in Production Example 2 was used as the adsorbent in Comparative Example 3 as it is.

The adsorbents obtained in Examples 1 to 6 and Comparative Examples 1 to 3 were subjected to adsorption test by the following method.

<Adsorption Test Method>

An adsorption test solution having the following composition was prepared by dissolving sodium chloride (NaCl), calcium chloride ($CaCl_2$), magnesium chloride ($MgCl_2$), potassium iodide (KI), and iodic acid ($HIO_3$) in ion-exchanged water.

| (Composition of Adsorption Test Solution) | |
|---|---|
| NaCl | 0.3% |

(continued)

| | |
|---|---|
| $Ca^{2+}$ | 400 ppm |
| $Mg^{2+}$ | 400 ppm |
| $I^-$ | 50 ppm |
| $IO_3^-$ | 100 ppm |

Into a 100 mL polyethylene bottle, were weighed 0.5 g of the adsorbent obtained in any of Examples 1 to 6 and Comparative Examples 1 to 3 and 100 g of the adsorption test solution, and the bottle was tightly stoppered. The tightly stoppered bottle was inverted 10 times and allowed to stand. The bottle was inverted 10 times again after the lapse of 24 hours from the start of standing. Then, the adsorption test solution in the polyethylene bottle was filtered to obtain a filtrate. The concentrations of iodide ions ($I^-$) and iodate ions ($IO_3^-$) in the resulting filtrate were measured. The adsorption ratios of iodide ions ($I^-$) and iodate ions ($IO_3^-$) were determined by dividing the difference between concentrations before and after adsorption by the concentration before the adsorption test. The results are shown in Table 1.

[Table 1]

| Examples/ Comparative Examples | Cerium(IV) hydroxide | Poorly soluble silver compound | | $I^-$ concentration (ppm) (before start of test: 50 ppm) | $I^-$ adsorption ratio (%) | $IO_3^-$ concentration (ppm) (before start of test: 100 ppm) | $IO_3^-$ adsorption ratio (%) |
|---|---|---|---|---|---|---|---|
| | Amount blended | Type | Amount blended | | | | |
| Example 1 | 95% | Silver zeolite | 5% | 8.9 | 82.2 | 44.1 | 55.9 |
| Example 2 | 90% | | 10% | 3 | 94 | 39.3 | 60.7 |
| Example 3 | 85% | | 15% | 0.4 | 99.2 | 44.3 | 55.7 |
| Example 4 | 95% | Silver phosphate | 5% | 6.2 | 87.6 | 46.3 | 53.7 |
| Example 5 | 90% | | 10% | 2.4 | 95.2 | 39.6 | 60.4 |
| Example 6 | 85% | | 15% | 1.3 | 97.4 | 41.8 | 58.2 |
| Comparative Example 1 | 100% | - | 0% | 34.2 | 31.6 | 54.4 | 45.6 |
| Comparative Example 2 | 0% | Silver zeolite | 100% | 0.15 | 99.7 | 100 | 0 |
| Comparative Example 3 | 0% | Silver phosphate | 100% | 0.1 or less | 99.8 or more | 100 | 0 |

As apparent from Table 1, the adsorbents containing cerium(IV) hydroxide and a poorly soluble silver compound produced in Examples 1 to 6 have a high adsorption ratio of iodide ions of 82.2% or more and also have a high adsorption ratio of iodate ions of 53.7% or more. On the other hand, the adsorbent of Comparative Example 1, which contains cerium(IV) hydroxide but does not contain a poorly soluble silver compound, has a sharply reduced adsorption ratio of iodide ions of 31.6% and also an adsorption ratio of iodate ions of only 45.6%. From these results, it is apparent that the adsorbent of the present invention has high performance of adsorbing both iodide ions and iodate ions since it contains a poorly soluble silver compound in addition to cerium(IV) hydroxide.

Further, the adsorbents of Comparative Examples 2 and 3, which do not contain cerium(IV) hydroxide and contain a poorly soluble silver compound, has a high adsorption ratio of iodide ions but an adsorption ratio of iodate ions of zero. As apparent from these results, a poorly soluble silver compound does not show the action of adsorbing iodate ions when it is used singly. However, when Comparative Example 1, in which only cerium hydroxide is used, is compared with Examples 1 to 6, in which a mixture of cerium hydroxide and a poorly soluble silver compound is used, the adsorption ratio of iodate ions is improved in Examples 1 to 6 by adding a poorly soluble silver compound to cerium hydroxide. These results show that, in the adsorbent of the present invention, the action of adsorbing iodate ions is synergistically improved by using cerium hydroxide in combination with a poorly soluble silver compound.

**Claims**

1. An adsorbent for removal of iodide ions and iodate ions, comprising cerium(IV) hydroxide and a poorly soluble silver compound.

2. The adsorbent according to claim 1, wherein the content of cerium(IV) hydroxide is 50% by mass or more and 99% by mass or less, and the content of the poorly soluble silver compound is 1% by mass or more and 50% by mass or less.

3. The adsorbent according to claim 1 or 2, wherein the poorly soluble silver compound has a solubility in 100 g of water at 20°C of 10 mg or less.

4. The adsorbent according to any one of claims 1 to 3, wherein the poorly soluble silver compound is at least one selected from silver zeolite, silver phosphate, silver chloride, and silver carbonate.

5. The adsorbent according to any one of claims 1 to 4, wherein the adsorbent is a granular product having a particle size of 200 $\mu$m or more and 1000 $\mu$m or less.

6. A method for producing the adsorbent according to claim 1, the method comprising the steps of:

   providing a mixed slurry containing a poorly soluble silver compound and wet-ground cerium(IV) hydroxide; subjecting the mixed slurry to solid-liquid separation and then drying the resulting solid to obtain a dry product; and grinding the dry product to obtain a ground product.

[Figure 1]

## INTERNATIONAL SEARCH REPORT

| International application No. |
| --- |
| PCT/JP2016/050795 |

### A. CLASSIFICATION OF SUBJECT MATTER
*B01J20/06*(2006.01)i, *B01J20/02*(2006.01)i, *B01J20/30*(2006.01)i, *G21F9/02* (2006.01)i, *G21F9/12*(2006.01)i

According to International Patent Classification (IPC) or to both national classification and IPC

### B. FIELDS SEARCHED

Minimum documentation searched (classification system followed by classification symbols)
B01J20/00-20/34, G21F9/12, C02F1/28, C02F1/42, C01B7/14

Documentation searched other than minimum documentation to the extent that such documents are included in the fields searched
Jitsuyo Shinan Koho      1922-1996   Jitsuyo Shinan Toroku Koho   1996-2016
Kokai Jitsuyo Shinan Koho   1971-2016   Toroku Jitsuyo Shinan Koho   1994-2016

Electronic data base consulted during the international search (name of data base and, where practicable, search terms used)
JSTPlus/JSTChina/JST7580(JDreamIII)

### C. DOCUMENTS CONSIDERED TO BE RELEVANT

| Category* | Citation of document, with indication, where appropriate, of the relevant passages | Relevant to claim No. |
| --- | --- | --- |
| A | Tomohiko KAWAKAMI et al., "Development of wide-varied adsorbents for one through purification of multi-nuclides contaminated water (3) adsorbents for iodine and iodate ions", Atomic Energy Society of Japan 2014 Nen Haru no Nenkai Yokoshu, 10 March 2014 (10.03.2014), 309 | 1-6 |
| A | JP 2014-213233 A  (Kaken Co., Ltd.), 17 November 2014 (17.11.2014), paragraphs [0015] to [0019] (Family: none) | 1-6 |
| A | JP 2000-254446 A  (Japan Atomic Energy Research Institute), 19 September 2000 (19.09.2000), claims; paragraph [0004] (Family: none) | 1-6 |

| ☒ Further documents are listed in the continuation of Box C. | ☐ See patent family annex. |
| --- | --- |

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 24 February 2016 (24.02.16) | 08 March 2016 (08.03.16) |

| Name and mailing address of the ISA/ Japan Patent Office 3-4-3,Kasumigaseki,Chiyoda-ku, Tokyo 100-8915,Japan | Authorized officer |
| --- | --- |
| | Telephone No. |

Form PCT/ISA/210 (second sheet) (January 2015)

14

**INTERNATIONAL SEARCH REPORT**

International application No.

PCT/JP2016/050795

C (Continuation).    DOCUMENTS CONSIDERED TO BE RELEVANT

| Category* | Citation of document, with indication, where appropriate, of the relevant passages | Relevant to claim No. |
|---|---|---|
| A | JP 61-187931 A  (Asahi Chemical Industry Co., Ltd.), 21 August 1986 (21.08.1986), page 2, lower right column, line 8 to page 3, upper right column, line 2; page 4, upper left column, line 13 to upper right column, line 2 (Family: none) | 1-6 |
| P,A | JP 2015-181972 A  (Kaken Co., Ltd.), 22 October 2015 (22.10.2015), claims; paragraphs [0024] to [0051], [0059] to [0071] (Family: none) | 1-6 |
| P,A | JP 5793231 B1  (The Nippon Chemical Industrial Co., Ltd.), 14 October 2015 (14.10.2015), paragraphs [0015] to [0038] (Family: none) | 1-6 |

Form PCT/ISA/210 (continuation of second sheet) (January 2015)

**EP 3 231 509 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2000254446 A
- WO 2012147937 A
- JP 2008093545 A
- JP 2013078711 A
- JP 2008259942 A
- WO 2011052008 A

### Non-patent literature cited in the description

- Technological development for disposal of radioactive iodine. Innovative and Viable Nuclear Energy Technology Development Project, Fiscal Year 2003 (Heisei 15) Research accomplishment report (Summary). National Institute for Materials Science, March 2004